# EUROPEAN PATENT APPLICATION

(11) **EP 4 685 170 A1**
(43) Date of publication of application: **28.01.2026**
(21) Application number: 24775151.4
(22) Date of filing: 18.03.2024
(51) Int. Cl.: C08G 18/83, C08G 18/67, C08G 18/71, C08F 290/06, C09D 4/06

(54) **SILANE-MODIFIED URETHANE ACRYLATE OLIGOMER AND ULTRAVIOLET-CURABLE PAINT COMPOSITION COMPRISING SAME**

(30) Priority: 20.03.2023 KR 20230035636
(71) Applicant: KCC Corporation, Seoul 06608 (KR)
(72) Inventor: RYU, Suk Hwa, Yongin-si, Gyeonggi-do 17003 (KR); PARK, Kyu Yeob, Yongin-si, Gyeonggi-do 17079 (KR); KIM, Kang Soo, Yongin-si, Gyeonggi-do 16902 (KR); CHO, Chang Hyun, Yongin-si, Gyeonggi-do 17056 (KR); MOON, Sung Hee, Seoul 05350 (KR); JUNG, Yun Sub, Yongin-si, Gyeonggi-do 16908 (KR)
(74) Representative: Pfenning, Meinig & Partner mbB
(86) International application number: PCT/KR2024/003344
(87) International publication number: WO 2024/196103

(57) **Abstract**

The present invention relates to an ultraviolet-curable coating composition having excellent curing stability, adhesion, and weather resistance, and a silane-modified urethane acrylate oligomer applicable thereto.

## Description

### TECHNICAL FIELD

The present invention relates to an ultraviolet-curable coating composition having excellent curing stability, adhesion, and weather resistance, and a silane-modified urethane acrylate oligomer applicable thereto.

### BACKGROUND ART

A car headlamp (headlight) is a lamp that illuminates the front of the car to allow safe driving at night, and is typically manufactured using a material having excellent transparency, impact resistance, moldability, and the like, such as plastic, particularly polycarbonate (PC). However, a PC material has poor scratch resistance, weather resistance, chemical resistance, and the like, and thus is used by being coated with a coating composition in order to make up for these poor properties. In order to provide a coating composition having excellent properties, research and development has been continuously conducted, and as an example, Korean Patent No. 10-0199908 discloses a coating composition using a polyfunctional urethane acrylate oligomer. However, a typical coating composition is unable to provide a sufficient level of scratch resistance, weather resistance, chemical resistance, and the like.

Meanwhile, typically, a clear PC lens using clear PC alone has been mainly used, but in recent years, there has been an increasing demand for a clear/black lens having two colors manufactured by double-injecting clear PC and black-colored PC according to recent car design trends. In the case of such clear/black PC materials, there are variations in the thermal conductivity, thermal energy, and UV energy absorption rate in the materials, and as a result, there is a variation in the curing balance of coating compositions under the same curing conditions, thereby causing a problem in that the adhesion, weather resistance, and the like are degraded. Therefore, there is a demand for the development of a coating composition exhibiting excellent adhesion and weather resistance when applied to a clear/black PC material.

In addition, with the commercialization of electric vehicles, materials of car radiator grilles are also changing, and as the colors of electric vehicle radiator grilles have diversified to include black, gray, and the like, there is a demand for stabilization of properties, such as curing stability, adhesion, and weather resistance, in a black-colored material of an ultraviolet-curable hard coating composition.

### DISCLOSURE OF THE INVENTION

### TECHNICAL PROBLEM

The present invention provides an ultraviolet-curable coating composition having excellent curing stability, adhesion, and weather resistance, and a silane-modified urethane acrylate oligomer applicable thereto.

### TECHNICAL SOLUTION

The present invention provides a silane-modified urethane acrylate oligomer obtained from an acrylate monomer having a hydroxyl group, a silane monomer having an isocyanate group, and a silane monomer having an alkoxy group, and an ultraviolet-curable coating composition including the same.

### ADVANTAGEOUS EFFECTS

An ultraviolet-curable coating composition according to the present invention has excellent curing stability, adhesion, and weather resistance, and thus may be applied for hard coating of a car headlamp (headlight). Particularly, the ultraviolet-curable coating composition of the present invention has excellent adhesion and weather resistance in a black PC material, and exhibits optimal curability by ultraviolet rays, thereby providing excellent adhesion and weather resistance when applied to a black PC material and a clear/black PC material.

### BEST MODE FOR CARRYING OUT THE INVENTION

Hereinafter, the present invention will be described. However, the present invention is not limited only to the following contents, and if necessary, each component may be variously modified or optionally combined. Therefore, it is to be understood that all changes, equivalents, and alternatives falling within the spirit and scope of the present invention are intended to be included.

The "number average molecular weight" and "weight average molecular weight" used herein are measured by a typical method known in the art, and may be measured by, for example, a gel permeation chromatograph (GPC) method. The "viscosity" is measured by a typical method known in the art, and may be measured using, for example, a Brookfield viscometer at room temperature (25 °C).

An ultraviolet-curable coating composition according to the present invention includes a silane-modified urethane acrylate oligomer. The ultraviolet-curable coating composition of the present invention may further include a polyurethane acrylate oligomer, an acrylate monomer, a photoinitiator, and an organic solvent, and if necessary, may further include one or more additives commonly used in the art, such as an ultraviolet absorber, an ultraviolet stabilizer, a fire retardant, a leveling agent, and an antifoaming agent.

### Silane-modified urethane acrylate oligomer

The ultraviolet-curable coating composition of the present invention includes a silane-modified urethane acrylate oligomer. The silane-modified urethane acrylate oligomer imparts excellent adhesion, particularly excellent adhesion to a black PC material, and excellent durability to a coating composition

The silane-modified urethane acrylate oligomer may have a number average molecular weight of 500 g/mol to 10,000 g/mol, for example, 1,000 g/mol to 8,000 g/mol, and an acrylic equivalent of 100 g/eq to 1,000 g/eq, for example, 200 g/eq to 700 g/eq. If the number average molecular weight and the acrylic equivalent are within the above-described ranges, the compatibility with a resin composition is excellent, and the cross-linking density of a coating film is improved, so that mechanical properties, appearance, and weather resistance may be improved. If the number average molecular weight is less than the above-described range, the viscosity is low, which may cause a problem in that the adhesion and gloss of a coating film are degraded, and if greater than the above-described range, the hardness of the coating film is increased and the elasticity of the coating film is degraded due to an increase in the molecular weight, which may result in causing a problem in that cracks are generated and the appearance and scratch resistance are degraded. If the acrylic equivalent is less than the above-described range, the cross-linking density and curing reactivity of a coating film are degraded, which may cause a problem in that the adhesion is degraded, and if greater than the above-described range, the hardness of the coating film increases, so that the coating film becomes brittle, which may cause a problem in that the elasticity is reduced and the appearance is degraded.

The silane-modified urethane acrylate oligomer may have a solid content of 30% to 50%, for example, 35% to 45%, and a viscosity (25 °C) of 5 cps to 100 cps, for example, 10 cps to 80 cps. If the solid content is less than the above-described range, there may be a problem in that curing reactivity is degraded due to a decrease in the solid content of a coating composition, and if greater than the above-described range, the workability of the coating composition may be deteriorated, which may cause a problem in that the appearance is degraded. If the viscosity is less than the above-described range, the viscosity is too low, so that the coating workability and storage stability of a coating composition are deteriorated, which may cause a problem in that the adhesion and chemical resistance of a coating film may be degraded, and if greater than the above-described range, the workability of the coating composition is deteriorated and the cross-linking density significantly increases, which may cause a problem in that the elasticity, appearance, and processability of the coating film are degraded.

The silane-modified urethane acrylate oligomer may be prepared from a composition including an acrylate monomer having a hydroxyl group, a silane monomer having an isocyanate group, and a silane monomer having an alkoxy group.

Based on the total weight of the composition, 10 wt% to 33 wt%, for example, 15 wt% to 30 wt% of the acrylate monomer having a hydroxyl group, 3 wt% to 12 wt%, for example, 5 wt% to 10 wt% of the silane monomer having an isocyanate group, 7 wt% to 35 wt%, for example, 10 wt% to 30 wt% of the silane monomer having an alkoxy group may be included. If the three types of monomers are included within the above-described content range, a suitable siloxane bond is generated, and structural stability becomes excellent, thereby increasing compatibility with a material, and as a result, there is an effect in that the adhesion and durability of a coating film are improved.

If the content of the acrylate monomer having a hydroxyl group is less than the above-described range, the number of hydroxyl groups is small, thereby reducing reactivity, so that the durability may be degraded when preparing a coating film, and if greater than the above-described range, the coating film becomes brittle due to an increase in the hydroxyl groups, thereby degrading elasticity, and as a result, the appearance, gloss, and scratch resistance of the coating film may be degraded. If the content of the silane monomer having an isocyanate group is less than the above-described range, the number of siloxane bonds is small, thereby reducing cross-linking density, so that the adhesion, gloss, and durability of a coating film may be degraded, and if greater than the above-described range, storage properties of coating composition are degraded due to hydrolysis caused by an increase in reactivity with moisture according to an increase in the silane molecular weight, and as a result, the appearance and weather resistance of the coating film may be degraded. If the content of the silane monomer having an alkoxy group is less than the above-described range, the number of siloxane bonds is small, thereby reducing cross-linking density, so that the adhesion, gloss, and durability of a coating film may be degraded, and if greater than the above-described range, storage properties of coating composition are degraded due to hydrolysis caused by an increase in reactivity with moisture according to an increase in the silane molecular weight, and as a result, the appearance and scratch resistance of the coating film may be degraded.

The silane-modified urethane acrylate oligomer may be prepared by a method including reacting an acrylate monomer having a hydroxyl group and a silane monomer having an isocyanate group to prepare an intermediate, and subjecting the intermediate and a silane monomer having an alkoxy group to hydrolysis and condensation reactions. The reaction may proceed in a solvent under a reaction catalyst.

As the acrylate monomer having a hydroxyl group, 2-hydroxyethyl acrylate, 2-hydroxypropyl acrylate, 4-hydroxy butyl acrylate, pentaerythritol triacrylate, pentaerythritol tetraacrylate, and the like may be used. The monomer may be used alone or in combination of two or more thereof.

As the silane monomer having an isocyanate group, (3-isocyanatopropyl)(trimethoxy)silane (IPTMS), 3-isocyanatopropyl triethoxy silane, and the like may be used. The monomer may be used alone or in combination of two or more thereof.

As the silane monomer having an alkoxy group, methyltrimethoxysilane, phenyltrimethoxysilane, tetramethoxysilane, tetraethoxysilane, methyltriethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, tetraethyl orthosilicate, and the like may be used. The monomer may be used alone or in combination of two or more thereof.

As the reaction catalyst, one that is commonly used in the art may be used without limitation, and as an example, dibutyl[bis(dodecanoyloxy)]stannane (DBTDL), 1N Acetic acid in DIW, hydrochloric acid, or the like may be used.

As the solvent, one that is commonly used in the art may be used without limitation, and as an example, methyl alcohol, ethyl alcohol, isopropyl alcohol, 2-methoxyethanol, 2-ethoxyethanol, 2-butoxyethanol, 1-methoxy-2-propanol (MOP), or the like may be used.

The intermediate and the silane monomer having an alkoxy group may be used in a weight ratio of 40 to 80 : 20 to 60, for example, 35 to 75 : 25 to 65. If the ratio of the intermediate to the silane monomer having an alkoxy group is less than the above-described range, the degree of cross-linking decreases, so that the adhesion of a coating film may be degraded, and if greater than the above-described range, the cross-linking density increases, so that the elasticity of the coating film may be degraded.

The silane-modified urethane acrylate oligomer may have a silsesquioxane structure. As an example, the silane-modified urethane acrylate oligomer may be represented by Formula 1 below.

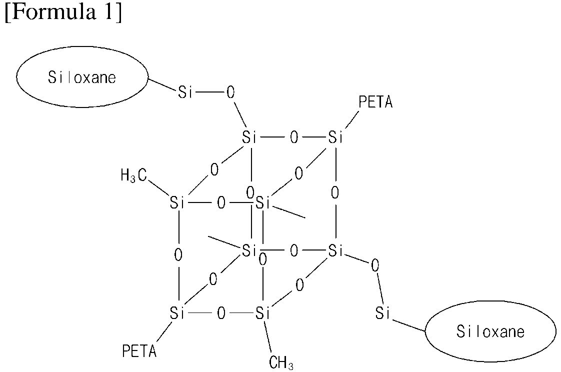

In the formula above,
siloxane is silsesquioxane, and
PETA is pentaerythritol triacrylate.

As an example, the siloxane is (RSiO_{3/2})n, which may be a silsesquioxane of a T-unit structure including a silicon atom bonded to three oxygen atoms, and may be synthesized by a hydrolysis-condensation polymerization method. For example, the siloxane may be polymerized from trialkoxysilane (RSi(OR)₃) and trichlorosilane (RSiCl₃), and in the above formula, R may be H, alkyl, aryl, or the like.

When applied to a black PC material and a clear/black PC material, a silane-modified urethane acrylate oligomer having the above-described silsesquioxane structure has an effect in that the storage stability of a coating composition and the adhesion of a coating film are excellent due to structural stability, and the heat resistance, weather resistance, and scratch resistance of a manufactured coating film are excellent due to the siloxane bonding.

The ultraviolet-curable coating composition may include, based on the total weight of the coating composition, 5 wt% to 15 wt%, for example, 7 wt% to 13 wt% of the silane-modified urethane acrylate oligomer. If the content of the silane-modified urethane acrylate oligomer is less than the above-described range, the cross-linking density of a manufactured coating film is degraded, so that the hardness, chemical resistance, and adhesion may be degraded, and if greater than the above-described range, the viscosity of a coating composition excessively increases, thereby degrading workability and drying properties, and as a result, the appearance and workability of the coating film may be deteriorated.

### Polyurethane acrylate oligomer

The ultraviolet-curable coating composition of the present invention includes a polyurethane acrylate oligomer. The polyurethane acrylate oligomer may include a 4-to 6-functional polyurethane acrylate oligomer and a 2- to 3-functional polyurethane acrylate oligomer.

The 4-to 6-functional polyurethane acrylate oligomer serves to improve the hardness and scratch resistance of the coating composition. The weight average molecular weight of the 4-to 6-functional polyurethane acrylate oligomer may be 2,000 g/mol to 4,000 g/mol, for example, 1,500 g/mol to 3,500 g/mol. If the weight average molecular weight is less than the above-described range, the viscosity of a coating composition is low, which may cause a problem in that the adhesion and gloss of a coating film are degraded, and if greater than the above-described range, the cross-linking density significantly increases, thereby degrading the elasticity of the coating film, which may result in causing a problem in that cracks are generated, thereby degrading the appearance and scratch resistance.

The 2-to 3-functional polyurethane acrylate oligomer serves to improve the adhesion and abrasion resistance of the coating composition. The weight average molecular weight of the 2-to 3-functional polyurethane acrylate oligomer may be 1,000 g/mol to 3,000 g/mol, for example, 1,500 g/mol to 2,500 g/mol. If the weight average molecular weight is less than the above-described range, the viscosity of a coating composition is low, which may cause a problem in that the adhesion and gloss of a coating film are degraded, and if greater than the above-described range, the cross-linking density significantly increases, thereby degrading the elasticity of the coating film, which may result in causing a problem in that cracks are generated, thereby degrading the appearance and scratch resistance.

The ultraviolet-curable coating composition may include, based on the total weight of the coating composition, 15 wt% to 35 wt%, for example, 20 wt% to 30 wt% of the polyurethane acrylate oligomer. If the content of the polyurethane acrylate oligomer is less than the above-described range, the cross-linking density of a manufactured coating film is degraded, so that the hardness, chemical resistance, and adhesion may be degraded, and if greater than the above-described range, the viscosity of a coating composition excessively increases, thereby degrading workability and drying properties, which may result in causing a problem in that the appearance and processability of the coating film are degraded.

As an example, the ultraviolet-curable coating composition may include, based on the total weight of the coating composition, 10 wt% to 20 wt%, for example, 13 wt% to 18 wt% of the 4- to 6-functional polyurethane acrylate oligomer, and 5 wt% to 15 wt%, for example, 7 wt% to 13 wt% of the 2- to 3-functional polyurethane acrylate oligomer. If the content of the 4- to 6-functional polyurethane acrylate oligomer is less than the above-described range, the cross-linking density of a manufactured coating film is degraded, so that the mechanical properties and adhesion may be degraded, and if greater than the above-described range, the viscosity of a coating composition excessively increases, thereby degrading workability and drying properties, and as a result, the appearance properties of the coating film may be degraded. If the content of the 2- to 3-functional polyurethane acrylate oligomer is less than the above-described range, the cross-linking density of a manufactured coating film is degraded, so that the hardness, chemical resistance, and adhesion may be degraded, and if greater than the above-described range, the viscosity of a coating composition excessively increases, thereby degrading workability and drying properties, and as a result, the appearance and processibility of the coating film may be degraded.

### Acrylate monomer

The ultraviolet-curable coating composition of the present invention includes an acrylate monomer. The acrylate monomer may include a 1- to 3-functional acrylate monomer. The acrylate monomer serves to improve the main properties of the coating film as well as the adhesion.

Non-limiting examples of the acrylate monomer include trimethylolpropane tri(meth)acrylate, ethoxylated trimethylolpropane tri(meth)acrylate, propoxylated trimethylolpropane tri(meth)acrylate, pentaerythritol tri(meth)acrylate, 1,6-hexanediol di(meth)acrylate, isobornyl(meth)acrylate, and the like, and these may be used alone or in combination of two or more thereof.

The ultraviolet-curable coating composition may include, based on the total weight of the coating composition, 10 wt% to 25 wt%, for example, 15 wt% to 20 wt% of the acrylate monomer. If the content of the acrylate monomer is less than the above-described range, the drying properties are degraded, which may cause a problem in that the adhesion and durability of a coating film are degraded, and if greater than the above-described range, the viscosity of a coating composition is lowered, which may cause a problem in that workability and flowability of the coating composition are degraded.

### Photoinitiator

The ultraviolet-curable coating composition of the present invention includes a photoinitiator. As the photoinitiator, 1-hydroxycyclohexylphenyl ketone, bis(2,4,6-trimethyl benzoyl)-phenylphosphine oxide, or the like may be used, and these may be used alone or in combination of two or more thereof. The photoinitiator may include two or more types of photoinitiators having different effective absorption wavelengths.

The ultraviolet-curable coating composition may include, based on the total weight of the coating composition, 1 wt% to 6 wt%, for example, 1.1 wt% to 5.5 wt% of the photoinitiator. If the content of the photoinitiator is less than the above-described range, degraded curing or uncuring may degrade the strength and adhesion of a coating film or generate wrinkles, and if greater than the above-described range, an unreacted photoinitiator may cause contamination, and overcuring may degrade the appearance and reflectance.

As an example, the ultraviolet-curable coating composition may include, based on the total weight of the coating composition, 1 wt% to 5 wt%, for example, 2 wt% to 4 wt% of the 1-hydroxycyclohexylphenyl ketone, and 0.1 wt% to 1 wt%, for example, 0.2 wt% to 0.9 wt% of the bis(2,4,6-trimethyl benzoyl)-phenylphosphine oxide.

### Organic solvent

The ultraviolet-curable coating composition of the present invention may include an organic solvent. The organic solvent is not particularly limited as long as it can improve the solubility of a coating composition, and lower the viscosity, thereby improving workability.

As the organic solvent, a ketone-based solvent, an ester-based solvent, an ether-based solvent, an alcohol-based solvent, or a mixture thereof may be used. Non-limiting examples of the organic solvent include propylene glycol methyl ether, toluene, xylene, methyl ethyl ketone, methyl propyl ketone, methyl butyl ketone, methyl isobutyl ketone, ethyl propyl ketone, methyl acetate, ethyl acetate, normal propyl acetate, isopropyl acetate, butyl acetate, methyl cellosolve acetate, cellosolve acetate, butyl cellosolve acetate, carbitol acetate, methanol, ethanol, normal propanol, isopropanol, normal butanol, isobutanol, tertiary butanol, benzene, acetone, tetrahydrofuran, dimethylformaldehyde, cyclohexanone, and the like, and these may be used alone or in combination of two or more thereof.

The content of the organic solvent is not particularly limited, and may be the residual amount adjusted to allow the total weight of the coating composition to be 100 wt%. For example, the ultraviolet-curable coating composition may include 30 wt% to 60 wt% of the organic solvent based on the total weight of the coating composition.

### Additive

The ultraviolet-curable coating composition of the present invention may further include one or more additives commonly used in the art, such as an ultraviolet absorber, an ultraviolet stabilizer, a fire retardant, a leveling agent, and an antifoaming agent.

A hydroxy phenyl triazine (HPT) derivative or the like may be used as the ultraviolet absorber, a hindered amine light stabilizer (HALS) or the like may be used as the ultraviolet stabilizer, a phenolic compound or the like may be used as an antioxidant, silicone diacrylate, and a silicone polyacrylate compound, or the like may be used as the leveling agent, and dimethyl polysiloxane or the like may be used as the antifoaming agent.

The contents of the additives are not particularly limited, and for example, may respectively be 0.1 wt% to 10 wt% based on the total weight of the coating composition.

Hereinafter, the present invention will be described in more detail with reference to examples. However, the following examples are merely illustrative of the present invention and are not intended to limit the scope of the present invention.

### [Synthesis Example 1: Synthesis of silane-modified urethane acrylate oligomer]

A reactor equipped with a thermometer, a stirring device, a reflux condenser, an air injection device, and a nitrogen injection device was prepared, and 0.1 g of a polymerization inhibitor (dibutylhydroxytoluene), 226 g of Monomer 1-1 (PETA 70%), and 78 g of Monomer 2 (3-isocyanatopropyl trimethoxy silane) were introduced to the reactor under nitrogen injection, and the temperature was raised to 40 °C while stirring the mixture. At 40 °C, 0.1 g of Reaction Catalyst 1 (dibutyltin dilaurate) was introduced thereto, and while confirming heat generation, the temperature was raised to 60 °C and maintained for 5 hours, and thereafter, the reaction was allowed to continue until NCO% reached 0.05% or less through wet measurement of %NCO. When the NCO% was satisfied, the reaction was terminated, thereby obtaining an intermediate. The prepared intermediate has a solid content of 100%, and a viscosity (25 °C) of 600 cps.

A reactor equipped with a thermometer, a stirring device, a reflux condenser, an air injection device, and a nitrogen injection device was prepared, and 304 g of the intermediate prepared above, 105 g of Monomer 3-1 (tetraethyl orthosilicate), 105 g of Monomer 3-2 (methyltrimethoxysilane), and 420 g of a solvent (propylene glycol methyl ether) were introduced to the reactor under nitrogen injection, and when the temperature was raised to 35 °C and reached 35 °C, 11 g of Reaction Catalyst 2 (1 N acetic acid) and 54.8 g of DIW were introduced thereto, and the temperature was maintained for 1 hour while paying attention to heat generation, followed by raising the temperature to 60 °C, which was maintained for 15 hours. The solid content was measured to confirm that the yield was 95% or greater, and the reaction was terminated, thereby obtaining Silane-modified urethane acrylate oligomer 1. The prepared silane-modified urethane acrylate oligomer 1 had a solid content of 37% and a viscosity (25 °C) of 15 cps.

### [Synthesis Examples 2-19]

Oligomers of Synthesis Examples 2 to 19 were prepared in the same manner as in Synthesis Example 1 except that the compositions described in Table 1-3 were used.

**[Table 1]**

| Component (g) | | Syn. Ex.1 | Syn. Ex.2 | Syn. Ex.3 | Syn. Ex.4 | Syn. Ex.5 | Syn. Ex.6 | Syn. Ex.7 |
|---|---|---|---|---|---|---|---|---|
| Intermediate | Monomer 1-1 | 226 | 300 | 151 | 136 | 327 | 175 | 272 |
| | Monomer 1-2 | | | | | | | |
| | Monomer 2 | 78 | 99 | 53 | 63 | 88 | 43 | 116 |
| | Reaction Catalyst 1 | 0.1 | 0.14 | 0.08 | 0.09 | 0.2 | 0.1 | 0.17 |
| | Polymerization inhibitor | 0.1 | 0.14 | 0.08 | 0.09 | 0.2 | 0.1 | 0.17 |
| Final | Monomer 3-1 | 105 | 54 | 150 | 146 | 62 | 135 | 105 |
| | Monomer 3-2 | 105 | 54 | 150 | 146 | 62 | 137 | 105 |
| | Solvent | 420 | 425 | 425 | 452 | 425 | 435 | 335 |
| | Reaction Catalyst 2 | 11 | 11 | 11 | 11 | 11 | 11 | 11 |
| | DIW | 54.8 | 56.72 | 59.84 | 45.82 | 24.6 | 63.8 | 55.66 |
| Total sum | | 1,000 | 1,000 | 1,000 | 1,000 | 1,000 | 1,000 | 1,000 |
| Solid content (%) | | 37 | 37 | 37 | 35 | 40 | 36 | 43 |
| Viscosity (25 °C, cps) | | 15 | 15 | 15 | 26 | 37 | 12 | 14 |

**[Table 2]**

| Component (g) | | Syn. Ex.8 | Syn. Ex.9 | Syn. Ex.10 | Syn. Ex.11 | Syn. Ex.12 | Syn. Ex.13 | Syn. Ex.14 |
|---|---|---|---|---|---|---|---|---|
| Intermediate | Monomer 1-1 | 295 | 256 | | 340 | 75 | 226 | 239 |
| | Monomer 1-2 | | | 226 | | | | |
| | Monomer 2 | 87 | 82 | 78 | 127 | 26 | 21 | 132 |
| | Reaction Catalyst 1 | 0.1 | 0.1 | 0.1 | 0.15 | 0.04 | 0.1 | 0.12 |
| | Polymerization inhibitor | 0.1 | 0.1 | 0.1 | 0.15 | 0.04 | 0.1 | 0.12 |
| Final | Monomer 3-1 | 42 | 160 | 105 | 25 | 203 | 131 | 116 |
| | Monomer 3-2 | 46 | 158 | 105 | 25 | 203 | 121 | 126 |
| | Solvent | 450 | 295 | 420 | 416 | 425 | 432 | 321 |
| | Reaction Catalyst 2 | 11 | 11 | 11 | 11 | 11 | 11 | 11 |
| | DIW | 68.8 | 37.8 | 54.8 | 55.7 | 56.92 | 57.8 | 54.76 |
| Total sum | | 1,000 | 1,000 | 1,000 | 1,000 | 1,000 | 1,000 | 1,000 |
| Solid content (%) | | 35 | 45 | 37 | 39 | 37 | 35 | 43 |
| Viscosity (25 °C, cps) | | 11 | 24 | 15 | 16 | 16 | 15 | 21 |

**[Table 3]**

| Component (g) | | Syn. Ex.15 | Syn. Ex.16 | Syn. Ex.17 | Syn. Ex.18 | Syn. Ex.19 |
|---|---|---|---|---|---|---|
| Intermediate | Monomer 1-1 | 226 | 226 | | 226 | 226 |
| | Monomer 1-2 | | | | | |
| | Monomer 2 | 78 | 78 | 78 | | 78 |
| | Reaction Catalyst 1 | 0.1 | 0.1 | 0.1 | 0.1 | 0.1 |
| | Polymerization inhibitor | 0.1 | 0.1 | 0.1 | 0.1 | 0.1 |
| Final | Monomer 3-1 | 34 | 192 | 141 | 123 | |
| | Monomer 3-2 | 26 | 173 | 136 | 121 | |
| | Solvent | 562 | 265 | 574 | 461 | 625 |
| | Reaction Catalyst 2 | 11 | 11 | 11 | 11 | 11 |
| | DIW | 62.8 | 54.8 | 59.8 | 57.8 | 59.8 |
| Total sum | | 1,000 | 1,000 | 1,000 | 1,000 | 1,000 |
| Solid content (%) | | 31 | 47 | 29 | 35 | 26 |
| Viscosity (25 °C, cps) | | 10 | 15 | 9 | 12 | 10 |

| | | | | | | |
|---|---|---|---|---|---|---|
| Monomer 1-1: Pentaerythritol triacrylate 70%, Pentaerythritol tetraacrylate 30% Monomer 1-2: Pentaerythritol triacrylate Monomer 2: 3-isocyanatopropyl trimethoxy silane Monomer 3-1: Tetraethyl orthosilicate Monomer 3-2: Methyltrimethoxysilane Reaction Catalyst 1: Dibutyl[bis(dodecanoyloxy)]stannane (DBTDL) Reaction Catalyst 2: IN Acetic acid Polymerization inhibitor: 2,6-Bis(1,1-dimethylethyl)-4-methylphenol (BHT) Solvent: 1-methoxy-2-propanol | | | | | | |

### [Examples 1-10: Preparation of ultraviolet-curable coating composition]

An ultraviolet-curable coating composition of each example was prepared according to the compositions described in Tables 4 below.

### [Comparative Examples 1-9: Preparation of ultraviolet-curable coating composition]

An ultraviolet-curable coating composition of each comparative example was prepared according the compositions described in Tables 5 below.

**[Table 4]**

| Component (wt%) | Examples | | | | | | | | | |
|---|---|---|---|---|---|---|---|---|---|---|
| | 1 | 2 | 3 | 4 | 5 | 6 | 7 | 8 | 9 | 10 |
| Oligomer 1-1 | 10 | | | | | | | | | |
| Oligomer 1-2 | | 10 | | | | | | | | |
| Oligomer 1-3 | | | 10 | | | | | | | |
| Oligomer 1-4 | | | | 10 | | | | | | |
| Oligomer 1-5 | | | | | 10 | | | | | |
| Oligomer 1-6 | | | | | | 10 | | | | |
| Oligomer 1-7 | | | | | | | 10 | | | |
| Oligomer 1-8 | | | | | | | | 10 | | |
| Oligomer 1-9 | | | | | | | | | 10 | |
| Oligomer 1-10 | | | | | | | | | | 10 |
| Oligomer 2 | 22.2 | 22.2 | 22.2 | 22.2 | 22.2 | 22.2 | 22.2 | 22.2 | 22.2 | 22.2 |
| Oligomer 3 | 5 | 5 | 5 | 5 | 5 | 5 | 5 | 5 | 5 | 5 |
| Monomer 1 | 5 | 5 | 5 | 5 | 5 | 5 | 5 | 5 | 5 | 5 |
| Monomer 2 | 8 | 8 | 8 | 8 | 8 | 8 | 8 | 8 | 8 | 8 |
| Photoinitiator 1 | 2 | 2 | 2 | 2 | 2 | 2 | 2 | 2 | 2 | 2 |
| Photoinitiator 2 | 0.2 | 0.2 | 0.2 | 0.2 | 0.2 | 0.2 | 0.2 | 0.2 | 0.2 | 0.2 |
| Ultraviolet absorber | 1.5 | 1.5 | 1.5 | 1.5 | 1.5 | 1.5 | 1.5 | 1.5 | 1.5 | 1.5 |
| Ultraviolet stabilizer | 0.5 | 0.5 | 0.5 | 0.5 | 0.5 | 0.5 | 0.5 | 0.5 | 0.5 | 0.5 |
| Antioxidant | 0.1 | 0.1 | 0.1 | 0.1 | 0.1 | 0.1 | 0.1 | 0.1 | 0.1 | 0.1 |
| Silicone additive | 0.5 | 0.5 | 0.5 | 0.5 | 0.5 | 0.5 | 0.5 | 0.5 | 0.5 | 0.5 |
| Organic solvent | 45 | 45 | 45 | 45 | 45 | 45 | 45 | 45 | 45 | 45 |
| Total | 100 | 100 | 100 | 100 | 100 | 100 | 100 | 100 | 100 | 100 |

**[Table 5]**

| Component (wt%) | Comparative Examples | | | | | | | | |
|---|---|---|---|---|---|---|---|---|---|
| | 1 | 2 | 3 | 4 | 5 | 6 | 7 | 8 | 9 |
| Oligomer 1-11 | 10 | | | | | | | | |
| Oligomer 1-12 | | 10 | | | | | | | |
| Oligomer 1-13 | | | 10 | | | | | | |
| Oligomer 1-14 | | | | 10 | | | | | |
| Oligomer 1-15 | | | | | 10 | | | | |
| Oligomer 1-16 | | | | | | 10 | | | |
| Oligomer 1-17 | | | | | | | 10 | | |
| Oligomer 1-18 | | | | | | | | 10 | |
| Oligomer 1-19 | | | | | | | | | 10 |
| Oligomer 2 | 22.2 | 22.2 | 22.2 | 22.2 | 22.2 | 22.2 | 22.2 | 22.2 | 22.2 |
| Oligomer 3 | 5 | 5 | 5 | 5 | 5 | 5 | 5 | 5 | 5 |
| Monomer 1 | 5 | 5 | 5 | 5 | 5 | 5 | 5 | 5 | 5 |
| Monomer 2 | 8 | 8 | 8 | 8 | 8 | 8 | 8 | 8 | 8 |
| Photoinitiator 1 | 2 | 2 | 2 | 2 | 2 | 2 | 2 | 2 | 2 |
| Photoinitiator 2 | 0.2 | 0.2 | 0.2 | 0.2 | 0.2 | 0.2 | 0.2 | 0.2 | 0.2 |
| Ultraviolet absorber | 1.5 | 1.5 | 1.5 | 1.5 | 1.5 | 1.5 | 1.5 | 1.5 | 1.5 |
| Ultraviolet stabilizer | 0.5 | 0.5 | 0.5 | 0.5 | 0.5 | 0.5 | 0.5 | 0.5 | 0.5 |
| Antioxidant | 0.1 | 0.1 | 0.1 | 0.1 | 0.1 | 0.1 | 0.1 | 0.1 | 0.1 |
| Silicone additive | 0.5 | 0.5 | 0.5 | 0.5 | 0.5 | 0.5 | 0.5 | 0.5 | 0.5 |
| Organic solvent | 45 | 45 | 45 | 45 | 45 | 45 | 45 | 45 | 45 |
| Total | 100 | 100 | 100 | 100 | 100 | 100 | 100 | 100 | 100 |

| | | | | | | | | | |
|---|---|---|---|---|---|---|---|---|---|
| Oligomer 1-1: Silane-modified urethane acrylate oligomer of Synthesis Example 1 Oligomer 1-2: Silane-modified urethane acrylate oligomer of Synthesis Example 2 Oligomer 1-3: Silane-modified urethane acrylate oligomer of Synthesis Example 3 Oligomer 1-4: Silane-modified urethane acrylate oligomer of Synthesis Example 4 Oligomer 1-5: Silane-modified urethane acrylate oligomer of Synthesis Example 5 Oligomer 1-6: Silane-modified urethane acrylate oligomer of Synthesis Example 6 Oligomer 1-7: Silane-modified urethane acrylate oligomer of Synthesis Example 7 Oligomer 1-8: Silane-modified urethane acrylate oligomer of Synthesis Example 8 Oligomer 1-9: Silane-modified urethane acrylate oligomer of Synthesis Example 9 Oligomer 1-10: Silane-modified urethane acrylate oligomer of Synthesis Example 10 Oligomer 1-11: Silane-modified urethane acrylate oligomer of Synthesis Example 11 Oligomer 1-12: Silane-modified urethane acrylate oligomer of Synthesis Example 12 Oligomer 1-13: Silane-modified urethane acrylate oligomer of Synthesis Example 13 Oligomer 1-14: Silane-modified urethane acrylate oligomer of Synthesis Example 14 Oligomer 1-15: Silane-modified urethane acrylate oligomer of Synthesis Example 15 Oligomer 1-16: Silane-modified urethane acrylate oligomer of Synthesis Example 16 Oligomer 1-17: Silane-modified urethane acrylate oligomer of Synthesis Example 17 Oligomer 1-18: Silane-modified urethane acrylate oligomer of Synthesis Example 18 Oligomer 1-19: Silane-modified urethane acrylate oligomer of Synthesis Example 19 Oligomer 2: 6-functional urethane acrylate oligomer (Mw 2,400 g/mol, viscosity (25 °C) 4,780 cps, Nv 80 wt%) Oligomer 3: 3-functional urethane acrylate oligomer (Mw 1,200 g/mol, viscosity (25 °C) 1,900 cps, Nv 82 wt%) Monomer 1: Hexamethylene diacrylate Monomer 2: Trimethylolpropane triacrylate Photoinitiator 1: 1-hydroxycyclohexylphenyl ketone Photoinitiator 2: Bis(2,4,6-trimethyl benzoyl)-phenylphosphine oxide Ultraviolet absorber: Hydroxyphenyl Triazines, HPT Ultraviolet stabilizer: TINUVIN123, BASF Company Limited Antioxidant: SONGNOX 1076, Songwon Industrial Group Silicone additive: BYK-333, BYK Additives & Instruments Organic solvent: Mixture of toluene, ethyl acetate, butyl acetate, KOCOSOL #100, xylene, and methyl isobutyl ketone | | | | | | | | | |

### [Properties evaluation]

In order to measure the properties of a coating film formed using the ultraviolet-curable coating composition manufactured in each of the experimental examples, a physical property test was conducted according to the following property measurement method, and the results are shown in Tables 6 and 7 below.

### Preparation of specimen

The ultraviolet-curable coating composition manufactured in each of the experimental examples was applied (thickness: 20 µm) on a polycarbonate substrate, and was subjected to photo-curing (IR before curing: 50 °C X 3 minutes, light amount: 1,000 mJ/cm², light intensity: 170 mW/cm²) to form a coating film.

### Initial adhesion

The evaluation was performed by conducting a cross-cut tape test in accordance with ASTM D3359. The surface of a total of 100 squares made of a grid of 10 horizontal squares and 10 vertical squares of 1 mm X 1 mm was scratched with a cross cutter, and Nichiban tape was attached thereto to evaluate the adhesion by counting the number of squares out of the 100 squares maintaining coating film attachment when the tape was detached from the surface.

### [Evaluation criteria]

Excellent (⊚): Maintaining the attachment of coating film to 99 squares or more
Good (∘): Maintaining the attachment of coating film to 95 squares to less than 99 squares
Average (Δ): Maintaining the attachment of coating film to 85 squares to less than 95 squares
Poor (×): Maintaining the attachment of coating film to less than 85 squares

### Heat resistance

The specimen was left to stand for 10 days under a test temperature (120 °C) condition, and then taken out and left to stand at room temperature for 1 hour to observe the discoloration, fading, swelling, cracking, gloss degradation, peeling, and the like of the coating film, which were evaluated as excellent (⊚), good (∘), average (Δ), and poor (×).

### Water resistance

The specimen was left to stand in water for 10 days under a test temperature (40 °C) condition, and then taken out and left to stand at room temperature for 1 hour to observe the discoloration, fading, swelling, cracking, gloss degradation, peeling, and the like of the coating film, which were evaluated as excellent (⊚), good (∘), average (Δ), and poor (×).

### Moisture resistance

The specimen was left to stand for 10 days under the temperature of 45 °C and the humidity of 95 % RH to observe the discoloration, fading, swelling, cracking, gloss degradation, peeling, and the like of the coating film, which were evaluated as excellent (⊚), good (∘), average (Δ), and poor (×).

### Thermal impact resistance

The specimen was left to stand for 10 days under a test temperature (-40 °C to 80 °C) condition, and then taken out and left to stand at room temperature for 1 hour to observe the discoloration, fading, swelling, cracking, gloss degradation, peeling, and the like of the coating film, which were evaluated as excellent (⊚), good (∘), average (Δ), and poor (×).

### Cold and heat resistance

The specimen was left to stand for 4 hours under the temperature of -20 °C and the humidity of 95 % RH, and then the temperature and the humidity were respectively changed to 40 °C and 95% RH, under which the specimen was left to stand for 4 hours, and the whole series of processes were repeated 5 times, followed by leaving the specimen at room temperature for 1 hour to observe the discoloration, fading, swelling, cracking, gloss degradation, peeling, and the like of the coating film, which were evaluated as excellent (⊚), good (∘), average (Δ), and poor (×).

### Accelerated weather resistance

According to SAE J1960, each specimen was subjected to irradiation under the following xenon arc conditions, and then it was observed whether there were no significant discoloration (color difference (ΔE *): 3.0 or less), fading, swelling, cracking, gloss degradation, and the like of the coating film, and whether there was no abnormality in the adhesion, which were evaluated as excellent (⊚), good (∘), average (Δ), and poor (×).

Xenon arc setting conditions: 4,000 kJ/m² [340 nm], BLACK PNL temperature (LIGHT) - 38±2 °C (DARK) 40 minutes of irradiation (50±5% RH), cycle - 60 minutes of irradiation (50±5% RH) 60 minutes of no irradiation (95±5% RH), illuminance - 0.55±0.02 W/(m² • nm)[340 nm]

**[Table 6]**

| | Examples | | | | | | | | | |
|---|---|---|---|---|---|---|---|---|---|---|
| | 1 | 2 | 3 | 4 | 5 | 6 | 7 | 8 | 9 | 10 |
| Initial Adhesion | ⊚ | ⊚ | ⊚ | ⊚ | ○ | ⊚ | ⊚ | ⊚ | ⊚ | ⊚ |
| Heat resistance | ⊚ | ⊚ | ⊚ | ⊚ | ⊚ | ⊚ | ⊚ | ○ | ⊚ | ⊚ |
| Water resistance | ⊚ | ⊚ | ⊚ | ⊚ | ⊚ | ⊚ | ○ | ⊚ | ⊚ | ⊚ |
| Moisture resistance | ⊚ | ⊚ | ⊚ | ⊚ | ⊚ | ⊚ | ⊚ | ⊚ | ⊚ | ⊚ |
| Thermal impact resistance | ⊚ | ⊚ | ⊚ | ○ | ⊚ | ⊚ | ⊚ | ⊚ | ○ | ⊚ |
| Cold and heat resistance | ⊚ | ⊚ | ⊚ | ⊚ | ⊚ | ○ | ⊚ | ⊚ | ⊚ | ⊚ |
| Accelerated weather resistance | ⊚ | ⊚ | ⊚ | ⊚ | ⊚ | ○ | ⊚ | ⊚ | ⊚ | ⊚ |

**[Table 7]**

| | Comparative Examples | | | | | | | | |
|---|---|---|---|---|---|---|---|---|---|
| | 1 | 2 | 3 | 4 | 5 | 6 | 7 | 8 | 9 |
| Initial Adhesion | ○ | ⊚ | ⊚ | ⊚ | × | × | × | × | Δ |
| Heat resistance | ⊚ | ⊚ | × | × | ⊚ | ○ | ○ | ○ | ○ |
| Water resistance | △ | △ | × | △ | △ | × | △ | △ | △ |
| Moisture resistance | ○ | ○ | × | × | × | △ | △ | × | × |
| Thermal impact resistance | × | × | △ | × | ⊚ | ⊚ | × | ○ | △ |
| Cold and heat resistance | △ | × | ○ | △ | ○ | ○ | × | × | ○ |
| Accelerated weather resistance | ○ | ○ | ○ | ○ | × | × | × | × | × |

As shown in Tables 6 and 7, the coating compositions of Examples 1 to 10 respectively using silane-modified urethane acrylate oligomers (Oligomers 1-1 to 1-10) according to the present invention exhibited excellent properties overall. On the other hand, the coating compositions of Comparative Examples 1 to 6 respectively using silane-modified urethane acrylate oligomers (Oligomers 1-11 to 1-16) including three types of monomers in amounts out of the content ranges of the present invention, the coating composition of Comparative Example 7 using a silane-modified urethane acrylate oligomer (Oligomer 1-17) not including an acrylate monomer having a hydroxyl group, the coating composition of Comparative Example 8 using a silane-modified urethane acrylate oligomer (Oligomer 1-18) not including a silane monomer having an isocyanate group, and the coating composition of Comparative Example 9 using a silane-modified urethane acrylate oligomer (Oligomer 1-19) not including a silane monomer having an alkoxy group exhibited inferior properties compared to the coating compositions of Examples 1 to 10.

### INDUSTRIAL AVAILABILITY

The present invention provides an ultraviolet-curable coating composition having excellent curing stability, adhesion, and weather resistance, and a silane-modified urethane acrylate oligomer applicable thereto.

## Claims

1. A silane-modified urethane acrylate oligomer prepared from a composition comprising an acrylate monomer having a hydroxyl group, a silane monomer having an isocyanate group, and a silane monomer having an alkoxy group,
which comprises 10 wt% to 33 wt% of the acrylate monomer having a hydroxyl group, 3 wt% to 12 wt% of the silane monomer having an isocyanate group, and 7 wt% to 35 wt% of the silane monomer having an alkoxy group, based on the total weight of the composition.

2. The silane-modified urethane acrylate oligomer of claim 1, having a number average molecular weight of 500 g/mol to 10,000 g/mol and an acrylic equivalent of 100 g/eq to 1,000 g/eq.

3. The silane-modified urethane acrylate oligomer of claim 1, being manufactured by a method comprising: reacting an acrylate monomer having a hydroxyl group and a silane monomer having an isocyanate group to prepare an intermediate; and subjecting the intermediate and a silane monomer having an alkoxy group to hydrolysis and condensation reactions.

4. The silane-modified urethane acrylate oligomer of claim 3, wherein the mixing ratio of the intermediate and the silane monomer having an alkoxy group is a weight ratio of 40 to 80 : 20 to 60.

5. The silane-modified urethane acrylate oligomer of claim 1, being represented by Formula 1 below: 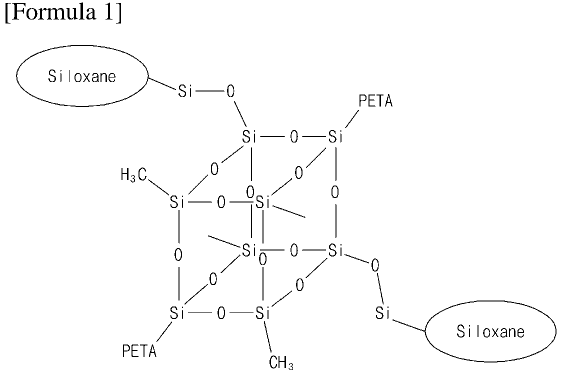
wherein in the formula above,
siloxane is silsesquioxane, and
PETA is pentaerythritol triacrylate.

6. An ultraviolet-curable coating composition comprising a silane-modified urethane acrylate oligomer, a polyurethane acrylate oligomer, an acrylate monomer, and a photoinitiator, wherein the silane-modified urethane acrylate oligomer is the silane-modified urethane acrylate oligomer of any one of claim 1 to claim 5.

7. The ultraviolet-curable coating composition of claim 6, wherein the polyurethane acrylate oligomer comprises a 4-to 6-functional polyurethane acrylate oligomer and a 2- to 3-functional polyurethane acrylate oligomer;
the 4-to 6-functional polyurethane acrylate oligomer has a weight average molecular weight of 2,000 g/mol to 4,000 g/mol; and
the 2-to 3-functional polyurethane acrylate oligomer has a weight average molecular weight of 1,000 g/mol to 3,000 g/mol.

8. The ultraviolet-curable coating composition of claim 6, comprising 5 wt% to 15 wt% of the silane-modified urethane acrylate oligomer, 15 wt% to 35 wt% of the polyurethane acrylate oligomer, 10 wt% to 25 wt% of the acrylate monomer, and 1 wt% to 6 wt% of the photoinitiator, based on the total weight of the coating composition.
